Europäisches Patentamt

European Patent Office

Office européen des brevets

(19)

(11) **EP 1 246 164 A1**

(12) **EUROPEAN PATENT APPLICATION**

(43) Date of publication:
**02.10.2002 Bulletin 2002/40**

(51) Int Cl.⁷: **G10L 15/00**, G10L 17/00,
G10H 1/00

(21) Application number: **01400821.3**

(22) Date of filing: **30.03.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Sony France S.A.**
**92110 Clichy La Garenne (FR)**

(72) Inventor: **Reck, Miranda Eduardo,**
**c/o Sony France S.A.**
**75005 Paris (FR)**

(74) Representative: **Thévenet, Jean-Bruno et al**
**Cabinet Beau de Loménie**
**158, rue de l'Université**
**75340 Paris Cédex 07 (FR)**

(54) **Sound characterisation and/or identification based on prosodic listening**

(57)    Vocal and vocal-like sounds can be characterised and/or identified by using an intelligent classifier adapted to determine prosodic attributes of the sounds and base a classificatory scheme upon a function of one or more of these attributes. The sounds are segmented before prosodic analysis on a segment by segment basis. The prosodic analysis of the sounds involves pitch analysis, intensity analysis, formant analysis and timing analysis.

FIG.1

**Description**

The present invention relates to the field of intelligent listening systems and, more particularly, to systems capable of characterising and/or identifying streams of vocal and vocal-like sounds.

In the present document, an intelligent listening system refers to a device (physical device and/or software) that is able to characterise or identify streams of vocal and vocal-like sounds according to some classificatory criteria, henceforth referred to as classificatory schemas. Sound characterisation involves attribution of an acoustic sample to a class according to some classificatory scheme, even if it is not known how this class should be labelled. Sound identification likewise involves attribution of an acoustic sample to a class but, in this case, information providing a class label has been provided. For example, a system may be programmed to be capable of identifying sounds corresponding to classes labelled "dog's bark", "human voice", or "owl's hoot" and capable of characterising other samples as belonging to further classes which it has itself defined dynamically, without knowledge of the label to be attributed to these classes (for example, the system may have experienced samples that, in fact, correspond to a horse's neigh and will be able to characterise future sounds as belonging to this group, without knowing how to indicate the animal sound that corresponds to this class).

Moreover, in the present document, the "streams of vocal and vocal-like sounds" in question include fairly continuous vocal sequences, such as spoken utterances and singing, as well as other sound sequences that resemble the human voice, including certain animal calls and electro-acoustically produced sounds. Prosodic listening refers to an activity whereby the listener focuses on quantifiable attributes of the sound signal such as pitch, amplitude, timbre and timing attributes, and the manner in which these attributes change, independent of the semantic content of the sound signal. Prosodic listening often occurs for example, when a person hears people speaking in a language that he/she does not understand.

Previous attempts have been made to devise listening systems capable of identification of vocal sounds. However, in general, these techniques involved an initial production of a symbolic representation of the sounds in question, for example, a manual rendering of music in standard musical notation, or use of written text to represent speech. Then the symbolic representation was processed, rather than the initial acoustic signal.

Some trials involving processing of the acoustic signal itself have been made in the field of automatic language identification (ALI) systems. The standard approach to such ALI systems is to segment the signal into phonemes, which are subsequently tested against models of the phoneme sequences allowed within the languages in question (see M. A. Zissman and E. Singer, "Automatic Language Identification of Telephone Speech Message Using Phoneme Recognition and N-Gram Modelling", IEEE International Conference on Acoustics, Speech and signal Processing, ICASSP 94, Adelaide, Australia (1994)). Here, the testing procedure can take various degrees of linguistic knowledge into account; most systems look for matching of individual phonemes, but others incorporate rules for word and sentence formation (see D. Caseiro and I. Trancoso, "Identification of Spoken European Languages", Proceedings of X European Signal Processing conference (Eusipco-98), Rhodes, Greece, 1998; and J. Hieronymous and S. Kadambe, "Spoken Language Identification Using Large Vocabulary Speech Recognition", Proceedings of the 1996 International Conference on Spoken Language Processing (ICSLP 96), Philadelphia, USA, 1996).

In the above-described known ALI methods, the classificatory schemas are dependent upon embedded linguistic knowledge that often must be programmed manually. Moreover, using classificatory schema of this type places severe restrictions on the systems in question and effectively limits their application strictly to language processing. In other words, these inherent restrictions prevent application in other domains, such as automatic recognition of singing style, identification of the speaker's mood, and sound-based surveillance, monitoring and diagnosis, etc. More generally, it is believed that the known ALI techniques do not cater for singing and general vocal-like sounds.

By way of contrast, preferred embodiments of the present invention provide sound characterisation and/or identification systems and methods that do not rely on embedded knowledge that has to be programmed manually. Instead these systems and methods are capable of establishing their classificatory schemes autonomously.

Further, preferred embodiments of the present invention provide sound characterisation and/or identification systems and methods that can deal with vocal and vocal-like sounds in general.

The present invention provides an intelligent classifier of vocal and/or vocal-like sounds adapted automatically to classify acoustic samples corresponding to said vocal or vocal-like sounds, with reference to one or more classes, the intelligent classifier comprising: means for determining attributes of a set of acoustic samples input during a first phase, it being known which samples of said set belong to a common class among said one or more classes; means for deriving a classificatory scheme defining said one or more classes, based on a function of one or more attributes of the acoustic samples; means for determining attributes of an acoustic sample of unknown class input during a phase subsequent to said first phase; and means for applying the derived classificatory scheme to said acoustic sample of unknown class whereby to classify said sample with reference to said one or more classes.

By use of an intelligent classifier, the present invention enables sound characterisation and/or identification without reliance on embedded knowledge that has to be programmed manually. Moreover, since there is no embedded knowledge based on linguistic rules, the present invention has broad application and, specifically, it is not limited to language identification tasks. Furthermore, the intelligent sound classifier provided by the present invention can deal with vocal and vocal-like sounds in general.

In preferred embodiments of the invention, the attribute-determining means are adapted to perform a prosodic analysis procedure on each input acoustic sample whereby to determine the value of one or more prosodic coefficients of the samples, and the derived classificatory-scheme is based on a function of prosodic coefficients of the acoustic samples. The prosodic analysis preferably includes pitch analysis, intensity analysis, formant analysis and timing analysis.

For example, in an embodiment of the present invention adapted to identify the language of utterances spoken in English, French and Japanese, samples of speech in these three languages are presented to the classifier during the first phase (which, here, can be termed a "training phase"). During the training phase, the classifier determines prosodic coefficients of the samples and derives a classificatory scheme suitable for distinguishing examples of one class from the others, based on a function of one or more of the prosodic coefficients. Subsequently, when presented with utterances of unknown class, the device infers the language by matching prosodic coefficients calculated on the "unknown" samples against the classificatory scheme.

It is advantageous if the acoustic samples are segmented and the prosodic analysis is applied to each segment. It is further preferred that the edges of the acoustic sample segments should be smoothed by modulating each segment waveform with a window function, such as a Hanning window. Classification of an acoustic sample preferably involves classification of each segment thereof and determination of a parameter indicative of the classification assigned to each segment. The classification of the overall acoustic sample then depends upon this evaluated parameter.

In preferred embodiments of the invention, the prosodic coefficients determined for each acoustic sample segment include one or more prosodic coefficients chosen in the group consisting of: the standard deviation of the pitch contour of the segment, the energy of the segment, the mean centre frequencies of the first, second and third formants of the segment, the standard deviation of the first, second and third formant centre frequencies of the segment, the standard deviation of the duration of the audible elements in the segment, the reciprocal of the average of the duration of the audible elements in the segment, and the average duration of the silences in the segment.

The intelligent sound classifier according to preferred embodiments of the present invention can derive a classificatory scheme from the prosodic coefficients determined for the samples in the first phase using means such as an artificial neural network, means for establishing a classification tree, means for establishing a regression tree, means for performing a principal components analysis, and means for performing a discriminant analysis.

The present invention further provides a sound characterisation and/or identification system incorporating an intelligent classifier of the above-described type.

The present invention yet further provides sound characterisation and/or identification methods, implemented using the various embodiments of the above-described intelligent classifier.

Further features and advantages of the present invention will become clear from the following description of a preferred embodiment thereof, given by way of example, illustrated by the accompanying drawings, in which:

Figure 1 illustrates features of a preferred embodiment of a sound identification system according to the present invention;

Figure 2 illustrates segmentation of a sound sample;

Figure 3 illustrates pauses and audible elements in a segment of a sound sample;

Figure 4 illustrates schematically the main steps in a prosodic analysis procedure used in preferred embodiments of the invention;

Figure 5 illustrates schematically the main steps in a preferred embodiment of formant analysis procedure used in the prosodic analysis procedure of Fig.4;

Figure 6 illustrates schematically the main steps in a preferred embodiment of assortment procedure used in the sound identification system of Fig.1;

Figure 7 is an example matrix generated by a prepare matrix procedure of the assortment procedure of Fig.6;

Figure 8 illustrates the distribution of attribute values of samples of two different classes;

Figure 9 illustrates a composite attribute defined to distinguish between the two classes of Fig.8;

Figure 10 illustrates use of two composite attributes to differentiate classes represented by data in the matrix of Fig.7;

Figure 11 illustrates schematically the main steps in a preferred embodiment of Matching Procedure used in the sound identification system of Fig.1;

Figure 12 is a matrix generated for segments of a sample of unknown class; and

Figure 13 is a confusion matrix generated for the data of Fig.12.

The present invention makes use of an intelligent classifier in the context of identification and characterisation of vocal and vocal-like sounds. Intelligent classifiers are known per se and have been applied in other fields - see, for example, "Artificial Intelligence and the Design of Expert Systems" by G.F. Luger and W. A. Stubblefield, The Benjamin/ Cummins, Redwood City, 1989.

An intelligent classifier can be considered to be composed of two modules, a Training Module and an Identification Module. The task of the Training Module is to establish a classificatory scheme according to some criteria based upon the attributes (e.g. shape, size, colour) of the objects that are presented to it (for example, different kinds of fruit, in a case where the application is identification of fruit). Normally, the classifier is presented with labels identifying the class to which each sample belongs, for example this fruit is a "banana", etc. The attributes of the objects in each class can be presented to the system either by means of descriptive clauses manually prepared beforehand by the programmer (e.g. the colour of this fruit is "yellow", the shape of this fruit is "curved", etc.), or the system itself can capture attribute information automatically using an appropriate interface, for example a digital camera. In the latter case the system must be able to extract the descriptive attributes from the captured images of the objects by means of a suitable analysis procedure.

The task of the Identification Module is to classify a given object by matching its attributes with a class defined in the classificatory scheme. Once again, the attributes of the objects to be identified are either presented to the Identification Module via descriptive clauses, or these are captured by the system itself.

In practice, the Training Module and Identification Module are often implemented in whole or in part as software routines. Moreover, in view of the similarity of the functions performed by the two modules, they are often not physically separate entities, but reuse a common core.

The present invention deals with processing of audio signals, rather than the images mentioned in the above description. Advantageously, the relevant sound attributes are automatically extracted by the system itself, by means of powerful prosody analysis techniques. According to the present invention the Training and Identification Modules can be implemented in software or hardware, or a mixture of the two, and need not be physically distinct entities.

The features of the present invention will now be explained with reference to a preferred embodiment constituting a sound identification system. It is to be understood that the invention is applicable in general to sound characterisation and/or identification systems in which certain or all of the classes are unlabelled.

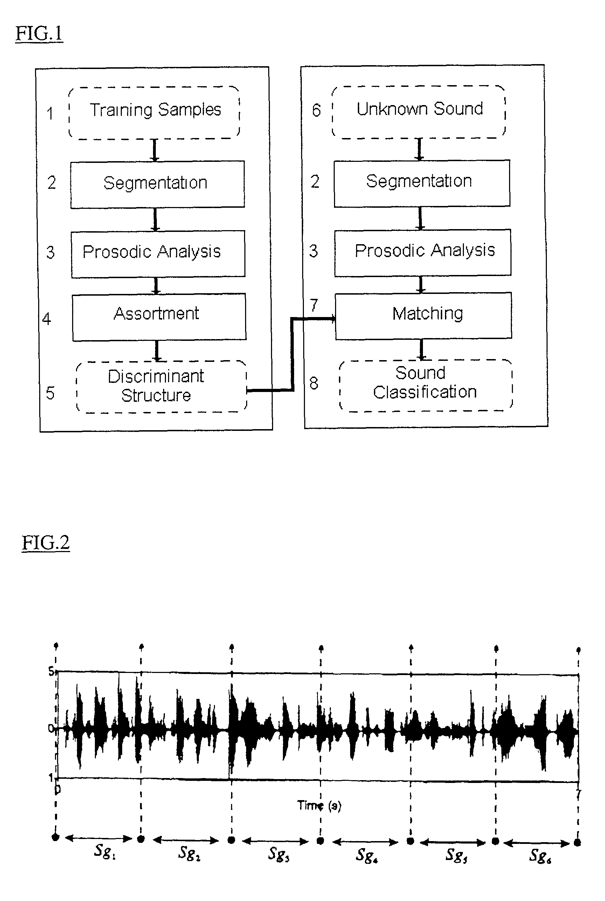

Figure 1 shows the data and main functions involved in a sound identification system according to this preferred embodiment. Data items are illustrated surrounded by a dotted line whereas functions are surrounded by a solid line. For ease of understanding, the data and system functions have been presented in terms of data/functions involved in a Training Module and data/functions involved in an Identification Module (the use of a common reference number to label two functions indicates that the same type of function is involved).

As shown in Fig.1, in this embodiment of sound identification system, training audio samples (1) are input to the Training Module and a Discriminant Structure (5), or classificatory scheme, is output. The training audio samples are generally labelled according to the classes that the system will be called upon to identify. For example, in the case of a system serving to identify the language of utterances, the label "English" would be supplied for a sample spoken in English, the label "French" for a sample spoken in French, etc.. In order to produce the Discriminant Structure (5), the Training Module according to this preferred embodiment performs three main functions termed Segmentation (2), Prosodic Analysis (3) and Assortment (4). These procedures will be described in greater detail below, after a brief consideration of the functions performed by the Identification Module.

As shown in Fig.1, the Identification Module receives as inputs a sound of unknown class (labelled "Unknown Sound 6", in Fig.1), and the Discriminant Structure (5). In order to classify the unknown Sound with reference to the Discriminant Structure (5), the Identification module performs Segmentation and Prosodic Analysis functions (2,3) of the same type as those performed by the Training Module, followed by a Matching Procedure (labelled (7) in Fig.1). This gives rise to a classification (8) of the sound sample of unknown class.

The various functions performed by the Training and Identification Modules will now be described in greater detail.

Segmentation (2 in Fig.1)

The task of the Segmentation Procedure (2) is to divide the input audio signal up into $n$ smaller segments $S$. Fig.2 illustrates the segmentation of an audio sample. First the input audio signal is divided into $n$ segments $Sg$ which may be of substantially constant duration, although this is not essential. Next, each segment $Sg_n$ is modulated by a window in order to smooth its edges (see E. R. Miranda, "Computer Sound Synthesis for the Electronic musician", Focal Press, UK, 1998). In the absence of such smoothing, the segmentation process itself may generate artefacts that perturb the analysis. A suitable window function is the Hanning window having a length equal to that of the segment $Sg_n$ (see C. Roads, "Computer Music Tutorial", The MIT Press, Cambridge, Mass., 1996):

$$S_n = \sum_{i=0}^{I-1} Sg_n(i) \; w(i) \qquad\qquad (1)$$

where $w$ represents the window and $I$ the length of both the segment and the window, in terms of a number of samples. However, other window functions may be used.

Prosodic Analysis (3 in Fig.1)

The task of the Prosodic Analysis Procedure (3 in Fig.1) is to extract prosodic information from the segments produced by the Segmentation Procedure. Basic prosodic attributes are loudness, pitch, voice quality, duration, rate and pause (see R. Kompe, "Prosody in Speech Understanding Systems", Lecture Notes in Artificial Intelligence 1307, Berlin, 1997). These attributes are related to speech units, such as phrases and sentences, that contain several phonemes.

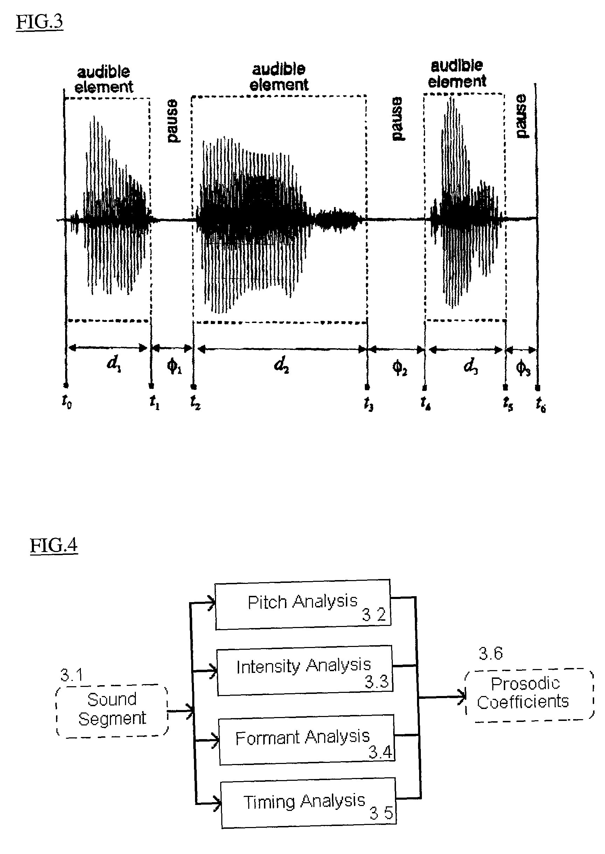

The measurement of these prosodic attributes is achieved via measurement of their acoustic correlates. Whereas the correlate of loudness is the signal's energy, the acoustic correlate of pitch is the signal's fundamental frequency. There is debate as to which is the best acoustic correlate of voice quality (see J. Laver "The Phonetic Description of Voice Quality", Cambridge University Press, Cambridge, UK, 1980). According to the preferred embodiments of the present invention, voice quality is assessed by measurement of the first three formants of the signal. The attribute "duration" is measured via the acoustic correlate which is the distance in seconds between the starting and finishing points of audible elements within a segment $S_n$, and the speaking rate is here calculated as the reciprocal of the average of the duration of all audible elements within the segment. A pause here is simply a silence between two audible elements and it is measured in seconds (see Figure 3).

As illustrated schematically in Figure 4, in the preferred embodiments of the present invention the Prosodic Analysis Procedure subjects each sound segment $S_n$ (3.1) to four types of analysis, namely Pitch Analysis (3.2), Intensity Analysis (3.3), Formant Analysis (3.4) and Timing Analysis (3.5). The result of these procedures is a set of prosodic coefficients (3.6). Preferably, the prosodic coefficients that are extracted are the following:

   a) the standard deviation of the pitch contour of the segment: $\Delta p(S_n)$,
   b) the energy of the segment: $E(S_n)$,
   c) the mean centre frequencies of the first, second and third formants of the segment: $MF_1(S_n)$, $MF_2(S_n)$, and $MF_3(S_n)$,
   d) the standard deviation of the first, second and third formant centre frequencies of the segment: $\Delta F_1(S_n)$, $\Delta F_2(S_n)$, and $\Delta F_3(S_n)$,
   e) the standard deviation of the duration of the audible elements in the segment: $\Delta d(S_n)$,
   f) the reciprocal of the average of the duration of the audible elements in the segment: $R(S_n)$, and
   g) the average duration of the silences in the segment: $\Phi(S_n)$.

Pitch Analysis (3.2 in Fig.4)

In order to calculate the standard deviation $\Delta p(S_n)$ of the pitch contour of a segment it is, of course, first necessary to determine the pitch contour itself. The pitch contour $P(t)$ is simply a series of fundamental frequency values computed for sampling windows distributed regularly throughout the segment.

The preferred embodiment of the present invention employs an improved auto-correlation based technique, proposed by Boersma, in order to extract the pitch contour (see P. Boersma, "Accurate Short-Term Analysis of the Fundamental Frequency and the Harmonics-to-Noise Ratio of a Sampled Sound", University of Amsterdam IFA Proceedings, No.17, pp.97-110, 1993). Auto-correlation works by comparing a signal with segments of itself delayed by successive intervals or time lags; starting from one sample lag, two samples lag, etc., up to $n$ samples lag. The objective of this comparison is to find repeating patterns that indicate periodicity in the signal. Part of the signal is held in a buffer and, as more of the same signal flows in, the algorithm tries to match a pattern in the incoming signal with the signal held in the buffer. If the algorithm finds a match (within a given error threshold) then there is periodicity in the signal and in this case the algorithm measures the time interval between the two patterns in order to estimate the frequency. Auto-correlation is generally defined, as follows:

$$r_x(\tau) = \sum_{i=0}^{I} x(i)\, x(i+\tau) \qquad\qquad (2)$$

where $I$ is the length of the sound stream in terms of number of samples, $r_x(\tau)$ is the auto-correlation as a function of the lag $\tau$, $x(i)$ is the input signal at sample $i$, and $x(i+\tau)$ is the signal delayed by $\tau$, such that $0 < \tau \le I$. The magnitude of the auto-correlation $r_x(\tau)$ is given by the degree to which the value of $x(i)$ is identical to itself delayed by $\tau$. Therefore the output of the auto-correlation calculation gives the magnitude for different lag values. In practice, the function $r_x(\tau)$ has a global maximum for $\tau = 0$. If there are global maxima beyond 0, then the signal is periodic in the sense that there will be a time lag $T_0$ so that all these maxima will be located at the lags $nT_0$, for every integer $n$, with $r_x(nT_0) = r_x(0)$. The fundamental frequency of the signal is calculated as $F_0 = 1/T_0$.

Now, equation (2) assumes that the signal $x(i)$ is stationary but a speech segment (or other vocal or vocal-like sound) is normally a highly non-stationary signal. In this case a short-term auto-correlation analysis can be produced by windowing $S_n$. This gives estimates of $F_0$ at different instants of the signal. The pitch envelope of the signal $x(i)$ is obtained by placing a sequence of $F_0(t)$ estimates for various windows $t$ in an array $P(t)$. Here the algorithm uses a Hanning window (see R. W. Ramirez, "The FFT Fundamentals and Concepts", Prentice Hall, Englewood Cliffs (NJ), 1985), whose length is determined by the lowest frequency value candidate that one would expect to find in the signal. The standard deviation of the pitch contour is calculated, as follows:

$$[\Delta p(S_n)]^2 = 1/T \times \sum_{t=1}^{T} (P(t) - \mu)^2 \qquad\qquad (3)$$

where $T$ is the total number of pitch values in $P(t)$ and $\mu$ is the mean of the values of $P(t)$.

Intensity Analysis (3.3 in Fig.4)

The energy $E(S_n)$ of the segment is obtained by averaging the values of the intensity contour $\varepsilon(k)$ of $S_n$, that is a series of sound intensity values computed at various sampling snapshots within the segment. The intensity contour is obtained by convolving the squared values of the samples using a smooth bell-shaped curve with very low peak side lobes (e.g. -92 dB or lower). Convolution can be generally defined, as follows:

$$\varepsilon(k) = \sum_{n=0}^{N-1} x(n)^2\, v(k-n) \qquad\qquad (4)$$

where $x(n)^2$ represents a squared sample $n$ of the input signal $x$, $N$ is the total number of samples in this signal and $k$ ranges over the length of the window $v$. The length of the window is set to one and a half times the period of the average fundamental frequency (The average fundamental frequency is obtained by averaging values of the pitch contour $P(t)$ calculated for $\Delta p(S_n)$ above). In order to avoid over-sampling the contour envelope, only the middle sample value for each window is convolved. These values are then averaged in order to obtain $E(S_n)$.

Formant Analysis (3.4 in Fig.4)

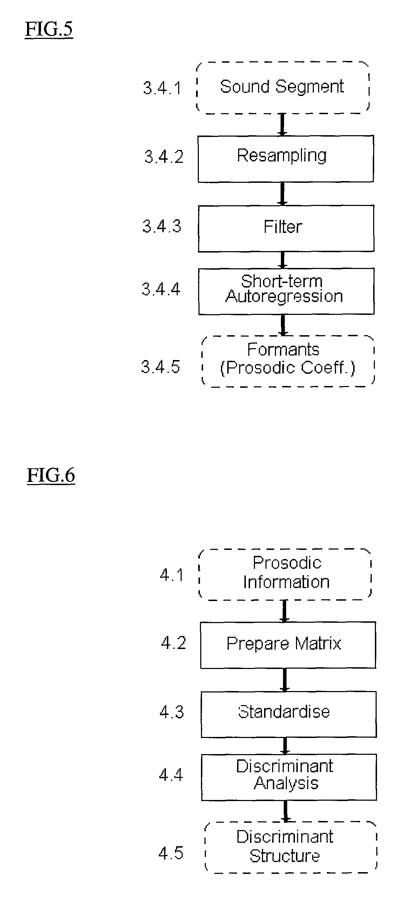

In order to calculate the mean centre frequencies of the first, second and third formants of the segment, $MF_1(S_n)$, $MF_2(S_n)$, and $MF_3(S_n)$, and the respective standard deviations, $\Delta F_1(S_n)$, $\Delta F_2(S_n)$, and $\Delta F_3(S_n)$, one must first obtain the formants of the segment. This involves applying a Formant Analysis procedure to the sound segment (3.4.1), as illustrated in Fig.5. The initial steps (3.4.2 and 3.4.3) in the Formant Analysis procedure are optional pre-processing steps which help to prepare the data for processing; they are not crucial. First, the sound is re-sampled (3.4.2) at a sampling rate of twice the value of the maximum formant frequency that could be found in the signal. For example, an adult male speaker should not have formants at frequencies higher than 5kHz so, in an application where male voices are analysed, a suitable re-sampling rate would be 10kHz or higher. After re-sampling, the signal is filtered (3.4.3) in order to increase its spectral slope. The preferred filter function is, as follows:

$$\delta = exp \, -(2\pi.F.t) \tag{5}$$

where $F$ is the frequency above which the spectral slope will increase by 6dB per octave and $t$ is the sampling period of the sound. The filter works by changing each sample $x_i$ of the sound, from back-to-front: $x_i = x_i - \delta x_{i-1}$.

Finally the signal is subjected to autoregression analysis (3.4.4, Figure 5). Consider $S(z)$ a sound that results from the application of a resonator or filter $V(z)$, to a source signal $U(z)$; that is, $S(z) = U(z)V(z)$. Given the signal $S(z)$, the objective of autoregression analysis is to estimate the filter $U(z)$. As the signal $S(z)$ is bound to have formants, the filter $U(z)$ should be described as an all-pole filter; that is, a filter having various resonance peaks. The first three peaks of the estimated all-pole filter $U(z)$ correspond to the first three formants of the signal.

A simple estimation algorithm would simply continue the slope of difference between the last sample in a signal and the samples before it. But here the autoregression analysis employs a more sophisticated estimation algorithm in the sense that it also takes into account estimation error; that is the difference between the sample that is estimated and the actual value of the current signal. Since the algorithm looks at sums and differences of time-delayed samples, the estimator itself is a filter: a filter that describes the waveform currently being processed. Basically, the algorithm works by taking several input samples at a time and, using the most recent sample as a reference, it tries to estimate this sample from a weighted sum of the filter coefficients and the past samples. The estimation of the value of the next sample $\gamma_t$ of a signal can be stated as the convolution of the $p$ estimation filter coefficients $\sigma_i$ with the $p$ past samples of the signal:

$$\gamma_t = \sum_{i=1}^{p} \sigma_i \, \gamma_{t-i} \tag{6}$$

The all-pole filter is defined as follows :

$$U(z) = 1 \div [\, 1 - \sum_{i=1}^{p} \sigma_i \, z^{-i} \,] \tag{7}$$

where $p$ is the number of poles and $\{\sigma_i\}$ are chosen to minimise the mean square filter estimation error summed over the analysis window.

Due to the non-stationary nature of the sound signal, short-term autoregression is obtained by windowing the signal. Thus, the Short-Term Autoregression procedure (3.4.4, Figure 5) modulates each window of the signal by a Gaussian-like function (refer to equation 1) and estimates the filter coefficients $\sigma_i$ using the classic Burg method (see J. Burg, "Maximum entropy spectrum analysis", Proceedings of the 37th Meeting of the Society of Exploration Geophysicists", Oklahoma City, 1967). More information about autoregression can be found in J. Makhaoul, "Linear prediction: A tutorial review", Proceedings of the IEEE, Vol. 63, No. 4, pp. 561-580, 1975.

Timing Analysis (3.5 in Fig.4)

In order to calculate the remaining attributes (the standard deviation of the duration of the audible elements in the segment: $\Delta d(S_n)$; the reciprocal of the average of the duration of the audible elements in the segment: $R(S_n)$; and the average duration of the silences in the segment: $\Phi(S_n)$), it is necessary to compute a time series containing the starting and finishing points of the audible elements in the segment. Audible elements are defined according to a minimum amplitude threshold value; those contiguous portions of the signal that lie above this threshold constitute audible elements (Figure 3). The task of the Time Analysis procedure is to extract this time series and calculate the attributes.

Given a time series $t_0, t_1, ... t_k$ (Figure 3) and assuming that $d_n$ is calculated as $t_n - t_{n-1}$, where $t_n$ and $t_{n-1}$ are the starting and finishing points of an audible element, then the standard deviation of the duration of the audible elements in the segment, $\Delta d(S_n)$, is calculated as follows:

$$(\Delta d(S_n))^2 = 1/T \times \sum_{t=1}^{T} (d(t) - \mu)^2 \tag{8}$$

where $T$ is the total number of audible elements, $d(t)$ is the set of the durations of these elements and $\mu$ is the mean value of the set $d(t)$. Then, the reciprocal of the average of the duration of the audible elements in the segment is calculated as:

$$R(S_n) = T \div \sum_{t=1}^{T} d(t) \tag{9}$$

Finally, the average duration of the silences in the segment is calculated as follows:

$$\Phi(S_n) = 1/T \times \sum_{t=1}^{T} \phi(t) \tag{10}$$

where $\phi(t)$ is the set of durations of the pauses in the segment.

Assortment Procedure (4 in Fig.1)

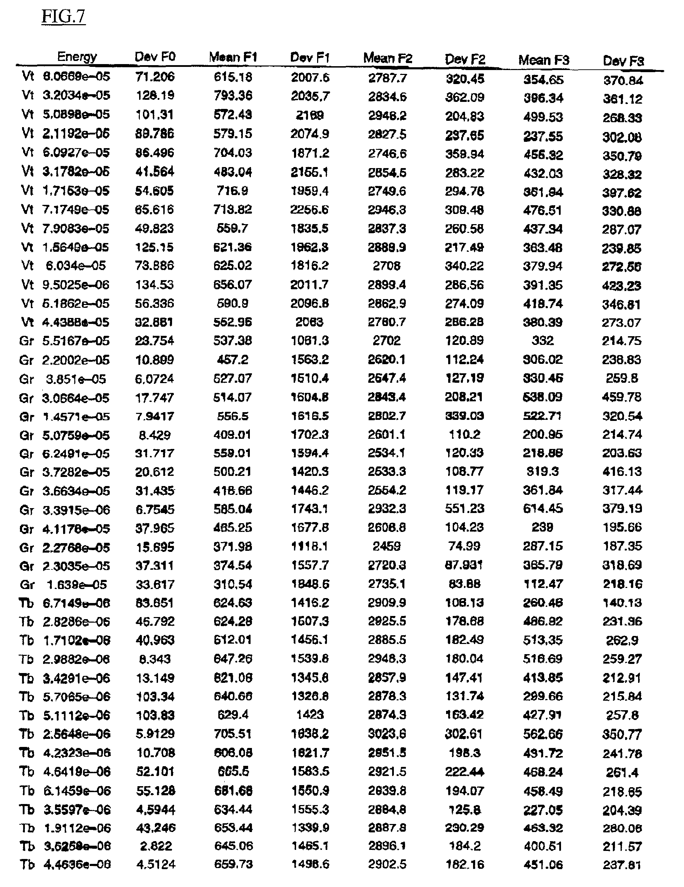

Figure 6 illustrates the basic steps in a preferred embodiment of the Assortment Procedure. The task of the Assortment procedure is to build a classificatory scheme by processing the prosodic information (4.1) produced by the Prosodic Analysis procedure, according to selected procedures which, in this embodiment, are Prepare Matrix (4.2), Standardise (4.3) and Discriminant Analysis (4.4) procedures. This resultant classificatory scheme is in the form of a Discriminant Structure (4.5, Figure 6) and it works by identifying which prosodic attributes contribute most to differentiate between the given classes, or groups. The Matching Procedure (7 in Fig.1) will subsequently use this structure in order to match an unknown case with one of the groups.

The Assortment Procedure can be implemented by means of a variety of methods, including: (1) Artificial Neural Networks (for example, see J Y, Clark and K. Warwick, "Artificial keys for botanical identification using a multi-layer perceptron neural network", Artificial Intelligence Review, No. 12, pp. 95-115, 1998), (2) Classification and Regression Trees (for example, see J. N. S. Eisenberg and T. E. McKone, "Decision tree method for the classification of chemical pollutants: Incorporation of cross-chemical variability and within-chemical uncertainty", Environmental Science & Technology, No. 32: 3396-3404, 1998) and (3) Principal Coordinates Analysis (for example see, J. E. Eckenwalder, "Taxonomic signal and noise in multivariate interpopulational relationships in Populus mexicana (Salicaccae)", Systematic Botany, No. 21, pp. 261-271, 1996). However, the preferred embodiment of the present invention employs Discriminant Analysis (see W. R. Klecka, "Discriminant Analysis", Sage, Beverly Hills (CA), 1980) to implement the Assortment procedure.

Here, discriminant analysis is used to build a predictive model of class or group membership based on the observed characteristics, or attributes, of each case. For example, suppose three different styles of vocal music, Gregorian, Tibetan and Vietnamese, are grouped according to their prosodic features. Discriminant analysis generates a discriminatory map from samples of songs in these styles. This map can then be applied to new cases with measurements for the attribute values but unknown group membership. That is, knowing the relevant prosodic attributes, we can use the discriminant map to determine whether the music in question belongs to the Gregorian (Gr), Tibetan (Tb) or Vietnamese (Vt) groups.

As mentioned above, in the preferred embodiment the Assortment procedure has three stages. Firstly, the Prepare Matrix procedure (4.2) takes the outcome from the Prosodic Analysis procedure and builds a matrix; each line corresponds to one segment $S_n$ and the columns correspond to the prosodic attribute values of the respective segment; e.g., some or all of the coefficients $\Delta p(S_n)$, $E(S_n)$, $MF_1(S_n)$, $MF_2(S_n)$, $MF_3(S_n)$, $\Delta F_1(S_n)$, $\Delta F_2(S_n)$, $\Delta F_3(S_n)$, $\Delta d(S_n)$, $R(S_n)$ and $\phi(Sn)$. Both lines and columns are labelled accordingly (see Figure 7 for an example showing a matrix with 8 columns, corresponding to selected amplitude, pitch and timbre attributes of 14 segments of a sound sample sung in Vietnamese style, 14 segments of a sound sample sung in Gregorian style and 15 segments of a sound sample sung in Tibetan style).

Next, the Standardise procedure (4.3, Figure 6) standardises or normalises the values of the columns of the matrix. Standardisation is necessary in order to ensure that scale differences between the values are eliminated. Columns are standardised when their mean averages are equal to zero and standard deviations are equal to one. This is achieved by converting all entries *x(i,j)* of the matrix to values ξ*(i,j)* according to the following formula:

$$\xi\ (i,j) = [x(i,j) - \mu_j] \div \delta_j \qquad (11)$$

where $\mu_j$ is the mean of the column *j* and $\delta_j$ is the standard deviation (see Equation 3 above) of column *j*.

Finally, the matrix is submitted to discriminant analysis at the Discriminant Analysis procedure (4.4, Figure 6).

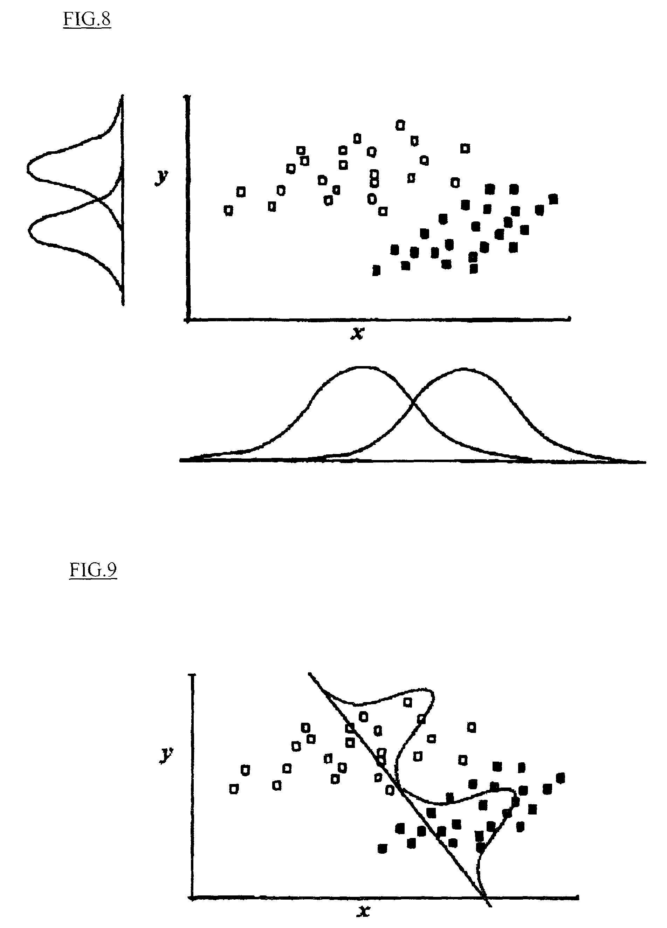

Briefly, discriminant analysis works by combining attribute values *Z(i)* in such a way that the differences between the classes are maximised. In general, multiple classes and multiple attributes are involved, such that the problem involved in determining a discriminant structure consists in deciding how best to partition a multi-dimensional space. However, for ease of understanding we shall consider the simple case of two classes, and two attributes represented in Figure 8 by the respective axes x and y. In Fig.8 samples belonging to one class are indicated by solid squares whereas samples belonging to the other class are indicated using hollow squares. In this case, the classes can be separated by considering the values of their respective two attributes but there is a large amount of overlapping.

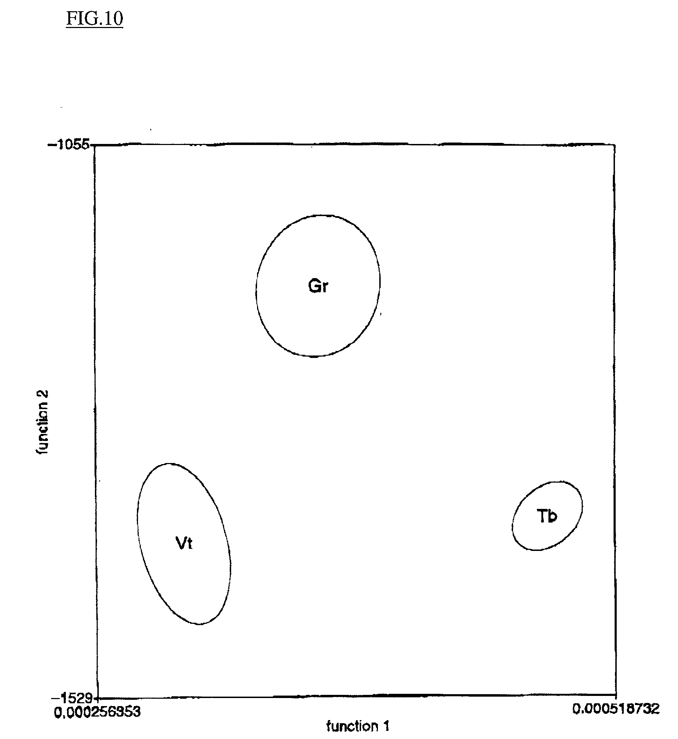

The objective of discriminant analysis is to weight the attribute values in some way so that new composite attributes, or discriminant scores, are generated. These constitute a new axis in the space, whereby the overlaps between the two classes are minimised, by maximising the ratio of the between-class variances to the within-class variances. Fig.9 illustrates the same case as Fig.8 and shows a new composite attribute (represented by an oblique line) which has been determined so as to enable the two classes to be distinguished more reliably. The weight coefficients used to weight the various original attributes are given by two matrices: the transformation matrix *E* and the feature reduction matrix *f* which transforms *Z(i)* into a discriminant vector *y(i)*:

$$y(i) = f \cdot E \cdot Z(i) \qquad (12)$$

For more information on this derivation refer to D. F. Morrison "Multivariate Statistical Methods", McGraw Hill, London (UK), 1990. The output from the Discriminant Analysis procedure is a Discriminant Structure (4.5 in Figure 6) of a multivariate data set with several groups. This discriminant structure consists of a number of orthogonal directions in space, along which maximum separability of the groups can occur. Figure 10 shows an example of a Discriminant Structure involving two composite attributes (labelled function 1 and function 2) suitable for distinguishing the Vietnamese, Gregorian and Tibetan vocal sample segments used to generate the matrix of Fig.7. Sigma ellipses surrounding the samples of each class are represented on the two-dimensional space defined by these two composite attributes and show that the classes are well separated.

Identification Module

The task of the Identification Module (Figure 1) is to classify an unknown sound based upon a given discriminant structure. The inputs to the Identification Module are therefore the Unknown Sound to be identified (6, Figure 1) plus the Discriminant Structure generated by the Training Module (5 in Figure 1/4.5 in Figure 6).

In preferred embodiments of the present invention, in the Identification Module the unknown sound is submitted to the same Segmentation and Prosodic Analysis procedures as in the Training Module (2 and 3, Figure 1), and then a Matching Procedure is undertaken.

Matching Procedure (7 in Fig.1)

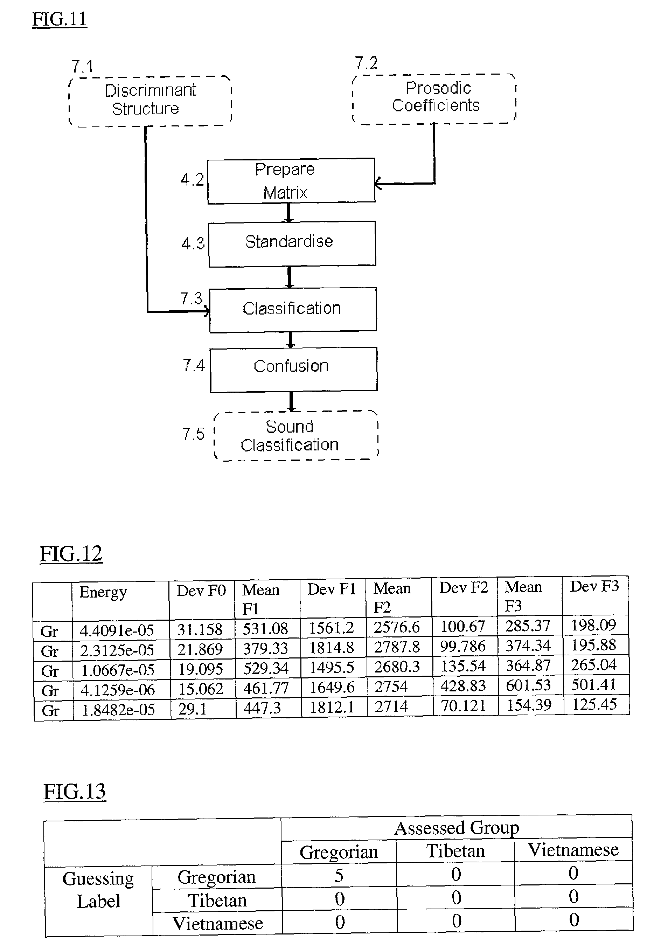

The task of the Matching Procedure (7, Figure 1) is to identify the unknown sound, given its Prosodic Coefficients (the ones generated by the Prosodic Analysis procedure) and a Discriminant Structure. The main elements of the Matching Procedure according to preferred embodiments of the present invention are illustrated in Fig.11.

According to the Fig.11 procedure, the Prosodic Coefficients are first submitted to the Prepare Matrix procedure (4.2, Figure 10) in order to generate a matrix. This Prepare Matrix procedure is the same as that performed by the Training Module with the exception that the lines of the generated matrix are labelled with a guessing label, since their class attribution is still unknown. It is advantageous that all entries of this matrix should have the same guessing label and this label should be one of the labels used for the training samples. For instance, in the example illustrated in Fig.12, the guessing label is Gr (for Gregorian song), but the system still does not yet know whether the sound sample in question is Gregorian or not. Next the columns of the matrix are standardised (4.3, see equation 11 above).

The task of the subsequent Classification procedure (7.3) is to generate a classification table containing the probabilities of group membership of the elements of the matrix against the given Discriminant Structure. In other words, it is calculated what is the probability $p_j$ that a given segment $x$ belongs to the group $j$ identified by the guessing label currently in use. The probabilities of group membership $p_j$ for a vector $x$ are defined as:

$$p(j \mid x) = [exp\ \text{-}(d_j^2(x)/2)] \div [\sum_{k=1}^{K} exp\ \text{-}(d_k^2(x)/2)] \qquad (13)$$

where $K$ is the number of classes and $d_i^2$ is a square distance function:

$$d_i^2 = ((x - \mu_i)^i \sum{}^{\text{-}1} (x - \mu_i)) - log\ [n_i \div \sum_{k=1}^{K} n_k] \qquad (14)$$

where $\Sigma$ stands for the pooled covariance matrix (it is assumed that all group covariance matrices are pooled, $\mu_i$ is the mean for group $i$ and $n_i$ is the number of training vectors in each group. The probabilities $p_j$ are calculated for each group $j$ and each segment $x$ so as to produce the classification table.

Finally, the classification table is fed to a Confusion procedure (7.4) which in turn gives the classification of the sound. The confusion procedure uses techniques well-known in the field of statistical analysis and so will not be described in detail here. Suffice it to say that each sample $x$ (in Fig.12) is compared with the discriminant map (of Fig. 10) and an assessment is made as to the group with which the sample $x$ has the best match - see, for example, D. Moore and G. McCabe, "Introduction to the Practice of Statistics", W.H. Freeman & Co., New York, 1993. This procedure generates a confusion matrix, with stimuli as row indices and responses as column indices, whereby the entry at position [$i$] [$j$] represents the number of times that response $j$ was given to the stimulus $i$. As we are dealing with only one sound classification at a time, the matrix gives the responses with respect to the guessing label only. The confusion matrix for the classification of the data in Figure 12 against the discriminant structure of Figure 10 is given in Figure 13. In this case, all segments of the signal scored in the Gr column, indicating unanimously that the signal is Gregorian singing.

It is to be understood that the present invention is not limited by the features of the specific embodiments described above. More particularly, various modifications may be made to the preferred embodiments within the scope of the appended claims.

For example, in the systems described above, a classificatory scheme is established during an initial training phase and, subsequently, this established scheme is applied to classify samples of unknown class. However, systems embodying the present invention can also respond to samples of unknown class by modifying the classificatory scheme so as to define a new class. This will be appropriate, for example, in the case where the system begins to see numerous samples whose attributes are very different from those of any class defined in the existing classificatory scheme yet are very similar to one another. The system can be set so as periodically to refine its classificatory scheme based on samples additional to the original training set (for example, based on all samples seen to date, or on the last $n$ samples, etc.).

Furthermore, as illustrated in Fig.7, the intelligent classifiers according to the preferred embodiments of the invention can base their classificatory schemes on a subset of the eleven preferred types of prosodic coefficient, or on all of them. In a case where the classificatory scheme is to be based only on a subset of the preferred prosodic coefficients, the intelligent classifier may dispense with the analysis steps involved in determination of the values of the other coefficients. For example, in the case of Fig.7, the intelligent classifier may omit the timing analysis (3.5 in Fig. 4) such that the corresponding prosodic coefficients, which will not be used in classification, are not calculated.

## Claims

1.   An intelligent classifier of vocal and/or vocal-like sounds adapted automatically to classify acoustic samples corresponding to said vocal or vocal-like sounds, with reference to one or more classes, the intelligent classifier comprising:

means for determining attributes of a set of acoustic samples input during a first phase, it being known which samples of said set belong to a common class among said one or more classes;

means for deriving a classificatory scheme defining said one or more classes, based on a function of one or more attributes of the acoustic samples;

means for determining attributes of an acoustic sample of unknown class input during a phase subsequent to said first phase; and

means for applying the derived classificatory scheme to said acoustic sample of unknown class whereby to classify said sample with reference to said one or more classes.

2. An intelligent sound classifier according to claim 1, wherein the attribute-determining means are adapted to perform a prosodic analysis procedure on each input acoustic sample whereby to determine the value of one or more prosodic coefficients of the samples, and the classificatory-scheme deriving means is adapted to derive a classificatory scheme based on a function of at least one of the one or more prosodic coefficients of the acoustic samples.

3. An intelligent sound classifier according to claim 2, wherein the attribute-determining means are adapted to implement a prosodic analysis comprising one or more of the procedures comprised in the group consisting of pitch analysis, intensity analysis, formant analysis and timing analysis.

4. An intelligent sound classifier according to claim 2 or 3, wherein the attribute-determining means are adapted to divide each acoustic sample into a sequence of segments and to calculate said values of one or more prosodic coefficients for segments in the sequence, and the classificatory-scheme deriving means is adapted to derive a classificatory scheme based on a function of at least one of the one or more prosodic coefficients of the segments.

5. An intelligent sound classifier according to claim 4, and comprising means for smoothing the edges of the acoustic sample segments by modulating each segment waveform with a window function.

6. An intelligent sound classifier according to claim 4 or 5, wherein the attribute-determining means are adapted to implement a prosodic analysis in order to extract values of one or more prosodic coefficients chosen in the group consisting of: the standard deviation of the pitch contour of the segment, the energy of the segment, the centre mean frequencies of the first, second and third formants of the segment, the standard deviation of the first, second and third formant centre frequencies of the segment, the standard deviation of the duration of the audible elements in the segment, the reciprocal of the average of the duration of the audible elements in the segment, and the average duration of the silences in the segment.

7. An intelligent sound classifier according to claim 4, 5 or 6, wherein the means for applying the derived classificatory scheme to an acoustic sample of unknown class is adapted to classify each segment of the sample of unknown class and to determine an overall classification of the acoustic sample based on a parameter indicative of the classifications of the constituent segments.

8. An intelligent sound classifier according to any previous claim, wherein the classificatory-scheme deriving means comprises means selected from the group comprising: an artificial neural network, means for establishing a classification tree, means for establishing a regression tree, means for performing a principal components analysis, and means for performing a discriminant analysis.

9. A sound characterisation and/or identification system incorporating an intelligent classifier according to any previous claim.

10. A sound characterisation and/or identification method, comprising the steps of:

providing an intelligent classifier adapted automatically to classify acoustic samples with reference to one or more classes; the intelligent classifier:

during a first phase:

determining attributes of a set of acoustic samples presented to the intelligent classifier during said first phase, it being known which samples of said set belong to a common class among said one or more classes; and

deriving a classificatory scheme defining said one or more classes, based on a function of one or more attributes of the acoustic samples; and

during a subsequent phase:

determining attributes of an acoustic sample of unknown class presented thereto during said subsequent phase, and
applying the derived classificatory scheme to said acoustic sample of unknown class whereby to classify said sample with reference to said one or more classes.

11. A sound characterisation and/or identification method according to claim 10, wherein the attribute-determining steps comprise a prosodic analysis procedure performed on each input acoustic sample whereby to determine the value of one or more prosodic coefficients of the samples, and the classificatory-scheme deriving step comprises deriving a classificatory scheme based on a function of at least one of the one or more prosodic coefficients of the acoustic samples.

12. A sound characterisation and/or identification method according to claim 11, wherein the attribute-determining steps comprise a prosodic analysis procedure itself comprising one or more procedures selected in the group consisting of pitch analysis, intensity analysis, formant analysis and timing analysis.

13. A sound characterisation and/or identification method according to claim 11 or 12, wherein the attribute-determining steps comprise the step of dividing each acoustic sample into a sequence of segments and calculating said values of one or more prosodic coefficients for segments in the sequence, and the classificatory-scheme deriving step comprises deriving a classificatory scheme based on a function of at least one of the one or more prosodic coefficients of the segments.

14. A sound characterisation and/or identification method according to claim 13, and comprising the step of smoothing the edges of the acoustic sample segments by modulating each segment waveform with a window function.

15. A sound characterisation and/or identification method according to claim 13 or 14, wherein the attribute-determining steps comprise a prosodic analysis adapted to extract values of one or more prosodic coefficients chosen in the group consisting of:

the standard deviation of the pitch contour of the segment, the energy of the segment, the centre mean frequencies of the first, second and third formants of the segment, the standard deviation of the first, second and third formant centre frequencies of the segment, the standard deviation of the duration of the audible elements in the segment, the reciprocal of the average of the duration of the audible elements in the segment, and the average duration of the silences in the segment.

16. A sound characterisation and/or identification method according to claim 13, 14 or 15, wherein the classificatory scheme applying step comprises the steps of classifying each segment of the sample of unknown class and determining an overall classification of the acoustic sample based on a parameter indicative of the classifications of the constituent segments.

17. A sound characterisation and/or identification method according to any previous claim, wherein the classificatory-scheme deriving step makes use of means selected from the group comprising: an artificial neural network, means for establishing a classification tree, means for establishing a regression tree, means for performing a principal components analysis, and means for performing a discriminant analysis.

FIG.1

FIG.2

FIG.3

FIG.4

**FIG.5**

| | |
|---|---|
| 3.4.1 | Sound Segment |
| 3.4.2 | Resampling |
| 3.4.3 | Filter |
| 3.4.4 | Short-term Autoregression |
| 3.4.5 | Formants (Prosodic Coeff.) |

**FIG.6**

| | |
|---|---|
| 4.1 | Prosodic Information |
| 4.2 | Prepare Matrix |
| 4.3 | Standardise |
| 4.4 | Discriminant Analysis |
| 4.5 | Discriminant Structure |

FIG.7

| | Energy | Dev F0 | Mean F1 | Dev F1 | Mean F2 | Dev F2 | Mean F3 | Dev F3 |
|---|---|---|---|---|---|---|---|---|
| Vt | 8.0669e–05 | 71.206 | 615.18 | 2007.6 | 2787.7 | 320.45 | 354.65 | 370.84 |
| Vt | 3.2034e–05 | 128.19 | 793.36 | 2035.7 | 2834.6 | 362.09 | 396.34 | 361.12 |
| Vt | 5.0898e–05 | 101.31 | 572.43 | 2169 | 2948.2 | 204.83 | 499.53 | 268.33 |
| Vt | 2.1192e–05 | 89.786 | 579.15 | 2074.9 | 2827.5 | 297.65 | 237.55 | 302.08 |
| Vt | 6.0927e–05 | 86.496 | 704.03 | 1871.2 | 2746.6 | 359.94 | 456.32 | 350.79 |
| Vt | 3.1782e–05 | 41.564 | 483.04 | 2155.1 | 2854.5 | 283.22 | 432.03 | 328.32 |
| Vt | 1.7153e–05 | 54.605 | 716.9 | 1959.4 | 2749.6 | 294.78 | 361.84 | 397.62 |
| Vt | 7.1749e–05 | 65.616 | 713.82 | 2256.6 | 2946.3 | 309.48 | 476.51 | 330.88 |
| Vt | 7.9083e–05 | 49.823 | 559.7 | 1835.5 | 2837.3 | 260.58 | 437.34 | 287.07 |
| Vt | 1.5649e–05 | 125.15 | 621.36 | 1962.3 | 2889.9 | 217.49 | 363.48 | 239.85 |
| Vt | 6.034e–05 | 73.886 | 625.02 | 1816.2 | 2708 | 340.22 | 379.94 | 272.56 |
| Vt | 9.5025e–06 | 134.53 | 656.07 | 2011.7 | 2899.4 | 286.56 | 391.35 | 423.23 |
| Vt | 5.1862e–05 | 56.336 | 590.9 | 2096.8 | 2862.9 | 274.09 | 418.74 | 346.81 |
| Vt | 4.4388e–05 | 32.861 | 552.96 | 2063 | 2780.7 | 286.28 | 380.39 | 273.07 |
| Gr | 5.5167e–05 | 23.754 | 537.38 | 1081.3 | 2702 | 120.89 | 332 | 214.75 |
| Gr | 2.2002e–05 | 10.899 | 457.2 | 1563.2 | 2620.1 | 112.24 | 306.02 | 238.83 |
| Gr | 3.851e–05 | 6.0724 | 527.07 | 1510.4 | 2647.4 | 127.19 | 330.45 | 259.8 |
| Gr | 3.0664e–05 | 17.747 | 514.07 | 1604.8 | 2843.4 | 208.21 | 538.09 | 459.78 |
| Gr | 1.4571e–05 | 7.9417 | 556.5 | 1616.5 | 2802.7 | 339.03 | 522.71 | 320.54 |
| Gr | 5.0759e–05 | 8.429 | 409.01 | 1702.3 | 2601.1 | 110.2 | 200.95 | 214.74 |
| Gr | 6.2491e–05 | 31.717 | 559.01 | 1594.4 | 2534.1 | 120.33 | 218.88 | 203.63 |
| Gr | 3.7282e–05 | 20.612 | 500.21 | 1420.3 | 2533.3 | 108.77 | 319.3 | 416.13 |
| Gr | 3.6634e–05 | 31.435 | 418.66 | 1446.2 | 2554.2 | 119.17 | 361.84 | 317.44 |
| Gr | 3.3915e–06 | 6.7545 | 585.04 | 1743.1 | 2932.3 | 551.23 | 614.45 | 379.19 |
| Gr | 4.1178e–05 | 37.965 | 465.25 | 1677.8 | 2608.8 | 104.23 | 239 | 195.66 |
| Gr | 2.2768e–05 | 15.695 | 371.98 | 1118.1 | 2459 | 74.99 | 287.15 | 187.35 |
| Gr | 2.3035e–05 | 37.311 | 374.54 | 1557.7 | 2720.3 | 87.931 | 365.79 | 318.69 |
| Gr | 1.639e–05 | 33.617 | 310.54 | 1848.6 | 2735.1 | 83.88 | 112.47 | 218.16 |
| Tb | 6.7149e–06 | 83.651 | 624.63 | 1416.2 | 2909.9 | 108.13 | 260.48 | 140.13 |
| Tb | 2.8286e–06 | 46.792 | 624.28 | 1507.3 | 2925.5 | 178.68 | 486.92 | 231.96 |
| Tb | 1.7102e–06 | 40.963 | 612.01 | 1456.1 | 2885.5 | 182.49 | 513.35 | 262.9 |
| Tb | 2.9882e–06 | 8.343 | 647.26 | 1539.8 | 2948.3 | 180.04 | 516.69 | 259.27 |
| Tb | 3.4291e–06 | 13.149 | 621.08 | 1345.8 | 2857.9 | 147.41 | 413.85 | 212.91 |
| Tb | 5.7065e–06 | 103.34 | 640.66 | 1326.8 | 2878.3 | 131.74 | 299.66 | 215.84 |
| Tb | 5.1112e–06 | 103.83 | 629.4 | 1423 | 2874.3 | 163.42 | 427.91 | 257.8 |
| Tb | 2.5648e–06 | 5.9129 | 705.51 | 1638.2 | 3023.6 | 302.61 | 562.66 | 350.77 |
| Tb | 4.2323e–06 | 10.708 | 606.08 | 1621.7 | 2951.5 | 198.3 | 431.72 | 241.78 |
| Tb | 4.6419e–06 | 52.101 | 665.5 | 1583.5 | 2921.5 | 222.44 | 468.24 | 261.4 |
| Tb | 6.1459e–06 | 55.128 | 681.66 | 1550.9 | 2839.8 | 194.07 | 458.49 | 218.65 |
| Tb | 3.5597e–06 | 4.5944 | 634.44 | 1555.3 | 2884.8 | 125.8 | 227.05 | 204.39 |
| Tb | 1.9112e–06 | 43.246 | 653.44 | 1339.9 | 2887.8 | 230.29 | 463.92 | 280.06 |
| Tb | 3.5258e–06 | 2.822 | 645.06 | 1465.1 | 2896.1 | 184.2 | 400.51 | 211.57 |
| Tb | 4.4636e–06 | 4.5124 | 659.73 | 1498.6 | 2902.5 | 182.16 | 451.06 | 237.81 |

FIG.8

FIG.9

FIG.10

FIG.11

FIG.12

|  | Energy | Dev F0 | Mean F1 | Dev F1 | Mean F2 | Dev F2 | Mean F3 | Dev F3 |
|---|---|---|---|---|---|---|---|---|
| Gr | 4.4091e-05 | 31.158 | 531.08 | 1561.2 | 2576.6 | 100.67 | 285.37 | 198.09 |
| Gr | 2.3125e-05 | 21.869 | 379.33 | 1814.8 | 2787.8 | 99.786 | 374.34 | 195.88 |
| Gr | 1.0667e-05 | 19.095 | 529.34 | 1495.5 | 2680.3 | 135.54 | 364.87 | 265.04 |
| Gr | 4.1259e-06 | 15.062 | 461.77 | 1649.6 | 2754 | 428.83 | 601.53 | 501.41 |
| Gr | 1.8482e-05 | 29.1 | 447.3 | 1812.1 | 2714 | 70.121 | 154.39 | 125.45 |

FIG.13

|  |  | Assessed Group | | |
|---|---|---|---|---|
|  |  | Gregorian | Tibetan | Vietnamese |
| Guessing Label | Gregorian | 5 | 0 | 0 |
|  | Tibetan | 0 | 0 | 0 |
|  | Vietnamese | 0 | 0 | 0 |

**European Patent Office**

## EUROPEAN SEARCH REPORT

Application Number

EP 01 40 0821

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | DAVID GERHARD: "Audio Signal Classification" INTERNET PUBLICATION, 'Online! 23 February 2000 (2000-02-23), pages 1-46, XP002170894 Retrieved from the Internet: <URL:www.cs.sfu.ca/dbg/personal/publicatio ns/depth.pdf> 'retrieved on 2001-06-29! * paragraph '1.2.1!; figure 3 * * paragraph '1.5.1! * * paragraph '4.1.1! * * paragraph '4.1.5! * * paragraph '0005! - paragraph '05.1! * * paragraph '06.3! * | 1-17 | G10L15/00 G10L17/00 G10H1/00 |
| X | WOLD E ET AL: "Content-based classification, search, and retrieval of audio" IEEE MULTIMEDIA,IEEE COMPUTER SOCIETY,US, vol. 3, no. 3, 1996, pages 27-36, XP002154735 ISSN: 1070-986X * abstract; figure 5 * -/-- | 1-3,6, 10-12,15 | TECHNICAL FIELDS SEARCHED (Int.Cl.7) G10L G10H |

The present search report has been drawn up for all claims

| Place of search | Date of completion of the search | Examiner |
|---|---|---|
| MUNICH | 2 July 2001 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent
Office

**EUROPEAN SEARCH REPORT**

Application Number

EP 01 40 0821

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CAREY MICHAEL J ET AL: "Robust prosodic features for speaker identification" PROCEEDINGS OF THE 1996 INTERNATIONAL CONFERENCE ON SPOKEN LANGUAGE PROCESSING, ICSLP. PART 3 (OF 4);PHILADELPHIA, PA, USA OCT 3-6 1996, vol. 3, 1996, pages 1800-1803, XP002170895 Int Conf Spoken Lang Process ICSLP Proc;International Conference on Spoken Language Processing, ICSLP, Proceedings 1996 IEEE, Piscataway, NJ, USA * page 1800, right-hand column, line 38 – line 40 * * page 1801, right-hand column, line 6 – line 8 * | 1,6,8, 10,15,17 | |
| A | EP 0 177 854 A (INT STANDARD ELECTRIC CORP) 16 April 1986 (1986-04-16) * abstract; figures 1,2 * | 1,9,10 | |
| A | US 4 241 329 A (BAHLER LAWRENCE G ET AL) 23 December 1980 (1980-12-23) * column 14, line 56 – column 15, line 5 * * column 18, line 27 – line 63 * | 2,8,11, 17 | TECHNICAL FIELDS SEARCHED (Int.Cl.7) |
| A | EP 1 076 329 A (IBM) 14 February 2001 (2001-02-14) * column 12, line 8 – line 14 * | 3,12 | |

The present search report has been drawn up for all claims

| Place of search | Date of completion of the search | Examiner |
|---|---|---|
| MUNICH | 2 July 2001 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 246 164 A1**

## ANNEX TO THE EUROPEAN SEARCH REPORT
## ON EUROPEAN PATENT APPLICATION NO.

EP 01 40 0821

02-07-2001

| Patent document cited in search report | | Publication date | Patent family member(s) | | Publication date |
|---|---|---|---|---|---|
| EP 0177854 | A | 16-04-1986 | AT | 48486 T | 15-12-1989 |
| | | | DE | 3574640 D | 11-01-1990 |
| | | | JP | 2044952 C | 09-04-1996 |
| | | | JP | 7074960 B | 09-08-1995 |
| | | | JP | 61179499 A | 12-08-1986 |
| | | | US | 5218668 A | 08-06-1993 |
| US 4241329 | A | 23-12-1980 | CA | 1172364 A | 07-08-1984 |
| | | | DE | 2825186 A | 08-11-1979 |
| | | | FR | 2424589 A | 23-11-1979 |
| | | | GB | 1603927 A | 02-12-1981 |
| | | | GB | 1603928 A | 02-12-1981 |
| | | | GB | 1603926 A | 02-12-1981 |
| | | | GB | 1603929 A | 02-12-1981 |
| | | | JP | 1421017 C | 29-01-1988 |
| | | | JP | 54142910 A | 07-11-1979 |
| | | | JP | 62028479 B | 20-06-1987 |
| | | | JP | 62201500 A | 05-09-1987 |
| EP 1076329 | A | 14-02-2001 | CN | 1283843 A | 14-02-2001 |